# EUROPEAN PATENT APPLICATION

(11) **EP 4 799 977 A1**
(43) Date of publication of application: **02.09.2026**
(21) Application number: 24880934.5
(22) Date of filing: 29.03.2024
(51) Int. Cl.: C01B 25/45, C01B 33/20, C01B 19/00, H01M 10/0562, H01M 10/0567, H01M 4/62

(54) **MIXED ION CONDUCTOR MATERIAL, AND PREPARATION METHOD THEREFOR AND USE THEREOF**

(30) Priority: 25.10.2023 CN 202311384970
(71) Applicant: Tianmulake Excellent Anode Materials Co., Ltd., Liyang, Jiangsu 213330 (CN)
(72) Inventor: WANG, Shuo, hangzhou, Jiangsu 213300 (CN); ZHANG, Zijian, hangzhou, Jiangsu 213300 (CN); LIU, Bonan, hangzhou, Jiangsu 213300 (CN); LU, Hao, hangzhou, Jiangsu 213300 (CN); CHU, Geng, hangzhou, Jiangsu 213300 (CN); LUO, Fei, hangzhou, Jiangsu 213300 (CN)
(74) Representative: Glück Kritzenberger Patentanwälte PartGmbB
(86) International application number: PCT/CN2024/084646
(87) International publication number: WO 2025/086548

(57) **Abstract**

Disclosed in the present invention are a mixed ion conductor material, and a preparation method therefor and the use thereof. The chemical general formula of the mixed ion conductor material is L_{1+x+y}MₓN₂₋ₓRₓ(ZO₄)₃ wherein O≤x≤3, 6.5<y≤36, and 6.5<y/(1+x)<9. The mixed ion conductor material is obtained by adding an alkali metal substance to react with the raw materials during preparation process, wherein the alkali metal substance comprises one or more of compounds containing ions Li⁺, Na⁺, K⁺, Rb⁺ or Cs⁺. When the mixed ion conductor material is applied to a secondary battery, the intersection point of a first cycle is 0.4-0.6V, the intersection point of a second cycle is 0.6-0.8V, the side reaction specific capacity is 50-200 mAh/g, the side reaction specific capacity of an electrochemical reaction platform is significantly reduced, and the energy density of a battery is improved.

## Description

The present application claims priority to the Chinese patent application No. 202311384970.1, entitled "Mixed Ion Conductor Material, and Preparation Method Therefor and Use Thereof", filed with the China National Intellectual Property Administration on October 25, 2023.

### BACKGROUND OF THE INVENTION

### 1. Technical Field

The present invention relates to the technical field of secondary battery materials and, in particular, to a mixed ion conductor material, and a preparation method therefor and a use thereof.

### 2. Description of Related Art

Fossil energy has caused serious air pollution and environmental problems such as global warming. Against the background of "dual carbon", countries around the world are committed to developing stable and efficient energy storage devices. Among various energy storage devices, electrochemical energy storage devices represented by lithium-ion batteries and sodium-ion batteries have the characteristics of high energy density, wide voltage window, long cycle life, and low self-discharge rate and are widely used in energy storage systems, electric transportation, consumer electronics and other fields; and solid-state batteries have attracted widespread attention from academia and industry due to the characteristics of high safety.

Currently, the solid-state electrolyte materials on the market are mainly divided into three types: polymer solid-state electrolytes, oxide solid-state electrolytes, and sulfide solid-state electrolytes. Polymer solid-state electrolytes have certain flexibility and are easy to process, but have low ionic conductivity at room temperature and poor thermal stability. Oxide solid-state electrolytes have good thermal stability; however, due to brittle structure, oxide solid-state electrolytes have poor structural stability and excessively high interface resistance, making them unsuitable for use in high-energy-density electrode systems. Sulfide solid-state electrolytes have the highest ionic conductivity among all solid-state electrolytes, with low grain boundary resistance. However, high manufacturing costs and complex preparation processes limit the further use of sulfide solid-state electrolytes. In this regard, considering compatibility with high-voltage positive electrode and metallic lithium negative electrode, a novel phase with low interface impedance and high ionic conductivity is synthesized by a simple process route of two-step mixing sintering, where a high concentration of alkali metal salts was mixed during the sintering process. Thus, it is believed that a mixed ion conductor material with simple process, excellent compatibility and stability, and good electrochemical properties has been achieved.

Regarding solid-state electrolyte materials used in solid-state lithium-ion batteries, NASICON-type solid-state electrolyte materials are known. Chinese patent document CN116169347A (publication date: May 26, 2023) discloses a method for preparing a sodium-ion solid-state electrolyte by sintering. However, its preparation process has higher energy consumption and uses expensive raw materials, which is not conducive to cost reduction and efficiency improvement in industry. Chinese patent document CN115986203A (publication date: June 20, 2023) discloses a solid-state electrolyte with a core-shell structure, having the disadvantages of high material cost, complex mixing process, and relatively high impedance at the interface layer of the solid-state electrolyte.

### BRIEF SUMMARY OF THE INVENTION

Embodiments of the present invention provide a mixed ion conductor material, a preparation method thereof and a use thereof, in order to solve the problems of high preparation cost and high interface impedance in known solid-state electrolyte materials. The mixed ion conductor material can improve the transport efficiency of carriers and reduce ion migration barriers. The solid-state electrolyte material has greatly reduced interface impedance, minimizes the occurrence of side reactions at the interface of active materials, and features high ionic conductivity and chemical stability, while ensuring compatibility with existing processes and low manufacturing costs.

To this end, in a first aspect, an embodiment of the present invention provides a mixed ion conductor material. The mixed ion conductor material has a general chemical formula of L_{1+x+y}MₓN₂₋ₓRₓ(ZO₄)₃, where 0≤x≤3, 6.5<y≤36, and 6.5<y/(1+x)≤9;
an ion of an L element includes one or more of: Li⁺, Na⁺, K⁺, Rb⁺, Cs⁺, H⁺, H₃O⁺, NH₄⁺, Mg²⁺, Ca²⁺, Sr²⁺, Ba²⁺, Cu⁺, Cu²⁺, Ag⁺, Pb²⁺, Gd²⁺, Mn²⁺, Co²⁺, Ni²⁺, Zn²⁺, Al³⁺, Ln³⁺, Zr⁴⁺, Ge⁴⁺, and Hf⁴⁺;
an ion of an M element includes one or more of: Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺;
an ion of an N element includes one or more of: Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺;
a Z element includes one or more of B, P, S, Si, Ge, As, Sb, Po, and Te;
an R element includes one or more of La, Ce, Pr, Nd, and Y.

The mixed ion conductor material is obtained by adding an alkali metal substance to react with a raw material during a preparation process, where the alkali metal substance includes one or more of compounds containing ions Li⁺, Na⁺, K⁺, Rb⁺or Cs⁺; and the raw material is composed of a material containing the ion of the L element, a material containing the ion of the M element, a material containing the ion of the N element, a material containing the ion of the R element, and a material containing the ion of the Z element;
the mixed ion conductor material at room temperature has an ionic conductivity of at least 3×10⁻³ S/cm, and an electronic conductivity of at least 10⁻² S/cm;
the mixed ion conductor material is used in a secondary battery; the secondary battery has an intersection point at 0.4V to 0.6V in a initial cycle and an intersection point at 0.6V to 0.8V in a second cycle, and the secondary battery has a side reaction specific capacity of 50 mAh/g to 200 mAh/g.

Preferably, in powder X-ray diffraction measurements using Cu-Kα rays with an X-ray wavelength of 1.5418 Angstroms, the mixed ion conductor material has characteristic diffraction peaks between 20° and 25 °, specifically at diffraction angles 2θ=20.64±1^{°} , 22.34±1°, 23.14±1°, and 24.80±1°; when the diffraction intensities of the characteristic diffraction peaks at 2θ=20.64±1°, 22.34± 1 °, 23.14±1°, and 24.80±1° are denoted as I₁, I₂, I₃ and I₄ respectively, 0.10≤I₁/I₄≤1.50, and 0.50≤I₂/I₃≤2.00;
the mixed ion conductor material has characteristic diffraction peaks between 32° and 39°, specifically at diffraction angles 2θ=33.92±2^{°} , 36.46±1.50^{°}, and 37.64±1.5^{°}; when the diffraction intensities of the characteristic peaks at 2θ = 33.92±2°, 36.46±1.50°, and 37.64±1.5° are denoted as I₅, I₆ and I₇ respectively, 0.50≤I₅/I₆≤1.50, and 0.50≤I₆/I₇≤4.

Preferably, a crystal structure of the mixed ion conductor material belongs to one or more of Pmn21 space group, P1 space group, Fd3m space group, or R3m space group.

Preferably, the mixed ion conductor material presents a gray-black powder appearance, with brightness L in a Lab color space satisfying 15≤L≤45.

In a second aspect, an embodiment of the present invention provides a preparation method for the mixed ion conductor material described in the first aspect above. The preparation method includes:
placing a solvent in a reactor, and then weighing, in a stoichiometric ratio, an L source material, an M source material, an N source material, an R source material, a Z source material and an alkali metal substance respectively as raw materials, and feeding the above raw materials into the reactor in order from the largest to the smallest particle size, where each material is stirred for 1 hour to 2 hours before feeding of the next one; and after all the raw materials are completely fed, and mixing the raw materials thoroughly to form a precursor solution;
drying the precursor solution, and then performing calcination to obtain an intermediate powder;
in a dry atmosphere, crushing and dispersing the intermediate powder in a pulverizer for 1 hour to 2 hours, and then drying at 80 °C for 12 hours to obtain a preliminary product with a Dv50 of 100 nm to 10 µ m; and
evenly dispersing and spreading the preliminary product in a crucible, and placing the crucible in a high-temperature furnace for sintering in a dry atmosphere to obtain the mixed ion conductor material.

Preferably, the L source material includes one or more of compounds containing ions Li⁺, Na⁺, K⁺, Rb⁺, Cs⁺, H⁺, H₃O⁺, NH₄⁺, Mg²⁺, Ca²⁺, Sr²⁺, Ba²⁺, Cu⁺, Cu²⁺, Ag⁺, Pb²⁺, Cd²⁺, Mn²⁺, Co²⁺, Ni²⁺, Zn²⁺, Al³⁺, Ln³⁺, Zr⁴⁺, Ge⁴⁺, and Hf⁴⁺;
the M source material includes one or more of compounds containing ions Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺;
the N source material includes one or more of compounds containing ions Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺;
the R source material includes one or more of compounds containing elements La, Ce, Pr, Nd and Y;
the Z source material includes one or more of compounds containing elements B, P, S, Si, Ge, As, Sb, Po and Te;
the alkali metal substance includes one or more of compounds containing ions Li⁺, Na⁺, K⁺, Rb⁺ or Cs⁺;
a molar ratio of the alkali metal substance to the L source material in the raw materials is less than or equal to 9.

Preferably, the drying atmosphere is dry air; the drying is performed at a temperature of 60°C to 90°C for 5 hours to 24 hours;
the calcination is performed at a temperature of 50°C to 750°C for 2 hours to 4 hours;
the sintering is performed at a temperature of 300°C to 850°C, and the sintering temperature is held for 2 hours to 7 hours.

In a third aspect, an embodiment of the present invention provides a use of the mixed ion conductor material described in the first aspect above. The mixed ion conductor material is used in one or more of an electrolyte, a separator, a positive electrode material additive, an negative electrodematerial additive, and an electrolyte additive.

In a fourth aspect, an embodiment of the present invention provide a secondary battery including the mixed ion conductor material described in the first aspect above.

Preferably, the secondary battery includes any one of a lithium-ion battery, a sodium-ion battery, a potassium-ion battery, and a vanadium-ion battery.

The present invention provides a mixed ion conductor material, a preparation method therefor and a use thereof. By introducing a certain proportion of lithium source, sodium source and potassium source materials to perform bulk phase activation during the production and preparation process, the original local crystal structure is destroyed. Driven by the chemical potential, an activator introduces a new crystal lattice structure at a macro scale into the known NASICON-type solid-state electrolyte structure to obtain the mixed ion conductor material with a chemical general formula of L_{1+x+y}MₓN₂₋ₓRₓ(ZO₄)₃. Highconcentration alkali metal ions L form vacancies in the three-dimensional structure with ZO₄, and these vacancies can increase the ion/electron transport paths and inhibit the side reaction phase transition process that generates LiF, thereby reducing the consumption of alkali metal ions by solvent molecules in the electrolyte. The characteristics of the new lattice structure endow the mixed ion conductor material of the present invention with high ion/electron transport performance and excellent interface stability, reduce the electrochemical potential, and limit the specific capacity of side reactions. Introducing the activator from the raw material end of the NASICON-type solid-state electrolyte can be highly compatible with the known typical high-temperature solid phase synthesis process route, thereby greatly reducing the manufacturing cost of the new material. Due to ultrahigh room-temperature ion transport function and interface stability, when used as one or more of an electrolyte, a separator, a positive electrode material additive, a negative electrodematerial additive or an electrolyte additive in a secondary battery, the mixed ion conductor material can significantly reduce the interface impedance of the secondary battery, enhance the transport efficiency of carriers, and improve the cycle stability of the secondary battery.

The present invention provides a preparation method for a mixed ion conductor material, which is simple to operate, is highly integrated with a known solid-state electrolyte preparation process, has low production cost, and can be put into large-scale production easily.

### BRIEF DESCRIPTION OF THE SEVERAL VIEWS OF THE DRAWINGS

The technical solutions of the embodiments of the present invention will be described in further detail below in conjunction with the drawings and embodiments.
FIG. 1 shows a flowchart of a preparation method for a mixed ion conductor material according to an embodiment of the present invention.
FIG. 2 shows X-ray diffraction (XRD) patterns of a mixed ion conductor material prepared in embodiment 1 of the present invention and a known NASICON-type solid-state electrolyte prepared in Comparative Example 1.
FIG. 3 shows a cycle capacity curve diagram of a button half cell assembled from the mixed ion conductor material provided in embodiment1 of the present invention.
FIG. 4 shows a comparative electrochemical impedance spectroscopy (EIS) plot of button half cells assembled from the mixed ion conductor material prepared in Embodiment 1 of the present invention and from the known NASICON-type solid-state electrolyte prepared in Comparative Example 1.
FIG. 5 shows specific capacity-voltage curves of the button half cells assembled from the mixed ion conductor material prepared in embodiment 1 of the present invention and from the known NASICON-type solid-state electrolyte prepared in Comparative Example 1.
FIG. 6 shows an XRD pattern of a mixed ion conductor material prepared in embodiment 2 of the present invention.

### DETAILED DESCRIPTION OF THE INVENTION

The present invention will be described in further detail below in conjunction with the drawings and specific embodiments, but it should be understood that these embodiments are only for more detailed explanation and should not be understood as limiting the present invention in any way. In other words, these embodiments are not intended to limit the scope of the present invention.

An embodiment of the present invention provides a mixed ion conductor material. The mixed ion conductor material has a general chemical formula of L_{1+x+y}MₓN₂₋ₓRₓ(ZO₄)₃, where 0≤x≤3, 6.5<y≤36, and 6.5<y/(1+x)≤9.

An ion of an L element includes one or more of: Li⁺, Na⁺, K⁺, Rb⁺, Cs⁺, H⁺, H₃O⁺, NH₄⁺, Mg²⁺, Ca²⁺, Sr²⁺, Ba²⁺, Cu⁺, Cu²⁺, Ag⁺, Pb²⁺, Cd²⁺, Mn²⁺, Co²⁺, Ni²⁺, Zn²⁺, Al³⁺, Ln³⁺, Zr⁴⁺, Ge⁴⁺, and Hf⁴⁺.

An ion of an M element includes one or more of: Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺.

An ion of an N element includes one or more of: Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺.

A Z element includes one or more of B, P, S, Si, Ge, As, Sb, Po, and Te.

An R element includes one or more of La, Ce, Pr, Nd, and Y.

The mixed ion conductor material is obtained by adding an alkali metal substance to react with a raw material during a preparation process, where the alkali metal substance includes one or more of compounds containing ions Li⁺, Na⁺, K⁺, Rb⁺or Cs⁺; and the raw material is composed of a material containing the ion of the L element, a material containing the ion of the M element, a material containing the ion of the N element, a material containing the ion of the R element, and a material containing the ion of the Z element.

In powder X-ray diffraction measurements using Cu-Kα rays with an X-ray wavelength of 1.5418 Angstroms, the mixed ion conductor material has characteristic diffraction peaks between 20° and 25°, specifically at diffraction angles 2θ=20.64±1^{°}, 22.34±1^{°}, 23.14±1^{°} ,and 24.80±1^{°} . when the diffraction intensities of the characteristic diffraction peaks at 2θ=20.64±1^{°} 22.34±1^{°}, 23.14±1^{°}, and 24.80±1^{°} are denoted as I₁, I₂, I₃ and I₄ respectively, 0.10≤I₁/I₄≤1.50, and 0.50≤I₂/I₃≤2.00.

The mixed ion conductor material has characteristic diffraction peaks between 32° and 39°, specifically at diffraction angles 2θ=33.92±2^{°}, 36.46±1.50^{°}, 37.64±1.5^{°}; when the diffraction intensities of the characteristic peaks at 2θ= 33.92±2^{°}, 36.46±1.50^{°}, and 37.64±1.5^{°} are denoted as I₅, I₆, and I₇ respectively, 0.50≤I₅/I₆≤1.50, and 0.50≤I₆/I₇≤4.

A crystal structure of the mixed ion conductor material belongs to one or more of Pmn21 space group, P1 space group, Fd3m space group, or R3m space group.

In the crystal structure of the mixed ion conductor material, highconcentration alkali metal ions L form vacancies in the three-dimensional structure with ZO₄⁻ ions, and these vacancies can increase the ion/electron transport paths and inhibit the side reaction phase transition process that generates LiF, thereby reducing the consumption of alkali metal ions by solvent molecules in the electrolyte.

The mixed ion conductor material presents a grayish-black powder appearance, with the brightness L in the Lab color space satisfying 15≤L≤45.

The mixed ion conductor material at room temperature has an ionic conductivity greater than or equal to 3×10-³ S/cm, and an electronic conductivity greater than or equal to 10⁻² S/cm;

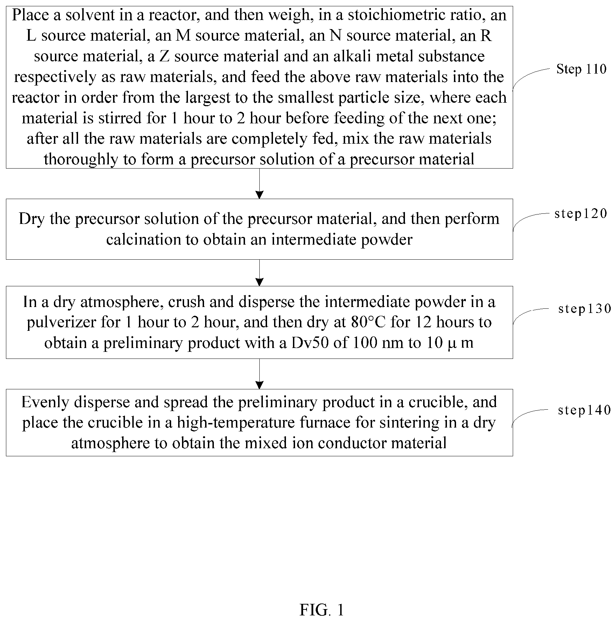

An embodiment of the present invention provides a preparation method for the mixed ion conductor material described above. As shown in FIG. 1, the preparation method includes the following steps.

In step 110, a solvent is placed in a reactor, and then an L source material, an M source material, an N source material, an R source material, a Z source material and an alkali metal substance are weighed in a stoichiometric ratio respectively as raw materials, and the above raw materials are fed into the reactor in order from the largest to the smallest particle size, where each material is stirred for 1 hour to 2 hours and then feeding the next one, until all the raw materials are completely fed, and the raw materials are mixed evenly to form a precursor solution.

The L source material includes one or more of compounds containing ions Li⁺, Na⁺, K⁺, Rb⁺, Cs⁺, H⁺, H₃O⁺, NH₄⁺, Mg²⁺, Ca²⁺, Sr²⁺, Ba²⁺, Cu⁺, Cu²⁺, Ag⁺, Pb²⁺, Cd²⁺, Mn²⁺, Co²⁺, Ni²⁺, Zn²⁺, Al³⁺, Ln³⁺, Zr⁴⁺, Ge⁴⁺, and Hf⁴⁺.

The M source material includes one or more of compounds containing ions Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺.

The N source material includes one or more of compounds containing ions Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺.

The R source material includes one or more of compounds containing elements La, Ce, Pr, Nd, and Y.

The Z source material includes one or more of compounds containing elements B, P, S, Si, Ge, As, Sb, Po, and Te.

The alkali metal substance includes one or more of compounds containing ions , Li⁺, Na⁺, K⁺, Rb⁺ or Cs⁺.

The solvent is a protic solvent, including one or more of deionized water, absolute ethanol, isopropanol, formic acid, acetic acid, and acetate ester (such as ethyl acetate).

A mass ratio of the solvent to the raw materials is 15:1-35:1.

A molar ratio of the alkali metal substance to the L source material in the raw materials is less than or equal to 9.

In step 120, the precursor solution is dried, and then calcination is performed to obtain an intermediate powder.
The drying is performed at a temperature of 60°C to 90°C and drying duration time is 5 hours to 24 hours;
the calcination is performed at a temperature of 50°C to 750°C and calcination duration time is 2 hours to 4 hours.

In step 130, in a dry atmosphere, the intermediate powder is crushed and dispersed in a pulverizer for 1 hour to 2 hours, and then dried at 80 °C for 12 hours to obtain a preliminary product with a Dv50 of 100 nm to 10 µ m.

The dry atmosphere is dry air.

In step 140, the preliminary product is evenly dispersed and spread in a crucible, and the crucible is placed in a high-temperature furnace for sintering in a dry atmosphere to obtain the mixed ion conductor material.

In this step, the dry atmosphere is dry air, and the sintering is performed at a temperature of 300°C to 850°C, and the sintering temperature is held for 2 hours to 7 hours.

The mixed ion conductor material obtained by the above-described preparation method in embodiments of the present invention can be used in a secondary battery as one or more of an electrolytes, a separator, a positive electrode material additive, a negative electrodematerial additive or an electrolyte additive.

The secondary battery described above includes any one of a lithium-ion battery, a sodium-ion battery and a potassium-ion battery. These batteries have an intersection point at 0.4V to 0.6V in the first cycle and an intersection point at 0.6V to 0.8V in the second cycle. The side reaction specific capacity of these batteries is between 50mAh/g and 200mAh/g. The potential of the electrochemical reaction plateau is significantly lowered, the side reaction specific capacity is reduced (that is, capacity loss is reduced), and the energy density of the batteries is improved.

For the secondary battery using the mixed ion conductor material of the present invention, the interface impedance of the secondary battery is significantly reduced, the transport efficiency of carriers is enhanced, and the cycle stability of the secondary battery is improved.

To better understand the technical solutions of the present invention, the preparation process and characteristics of the mixed ionic conductor material of the present invention are illustrated below by way of multiple specific examplary embodiment.

### Embodiment 1

This embodiment provides the preparation process and performance test of a mixed ionic conductor material, and the preparation process includes follows.
(1) Deionized water was placed in a reactor, and then a total of 150 g of an L source material LiOH, an M source material Al₂O₃, an N source material Ti(SO₄)₂, an R source material La₂O₃, a Z source material NaH₂PO₄ and an alkali metal substance LiCl were weighed in a stoichiometric ratio as raw materials and fed into the reactor in order from the largest to the smallest particle size, where each material was stirred for 2 hours before feeding of the next one,until all the raw materials were completely fed, and then the raw materials were mixed thoroughly to form a precursor solution.
(2) The precursor solution was dried at 90°C for 8 hours, and then subjected to calcination at 750°C for 3 hours to obtain an intermediate powder.
(3) In the presence of dry air, the intermediate powder was crushed and dispersed in a pulverizer for 1 hour, and then dried at 80°C for 12 hours to obtain a preliminary product with a Dv50 of 5 µ m.
(4) The preliminary product was evenly dispersed and spread in a crucible, and the crucible was placed in a high-temperature furnace for sintering at 850°C in a dry atmosphere for 2 hours to obtain a grayish-black powdery mixed ion conductor material with a general chemical formula of Li_{10.4}Al_{0.3}Ti_{1.7}La_{0.3}(PO₄)₃.

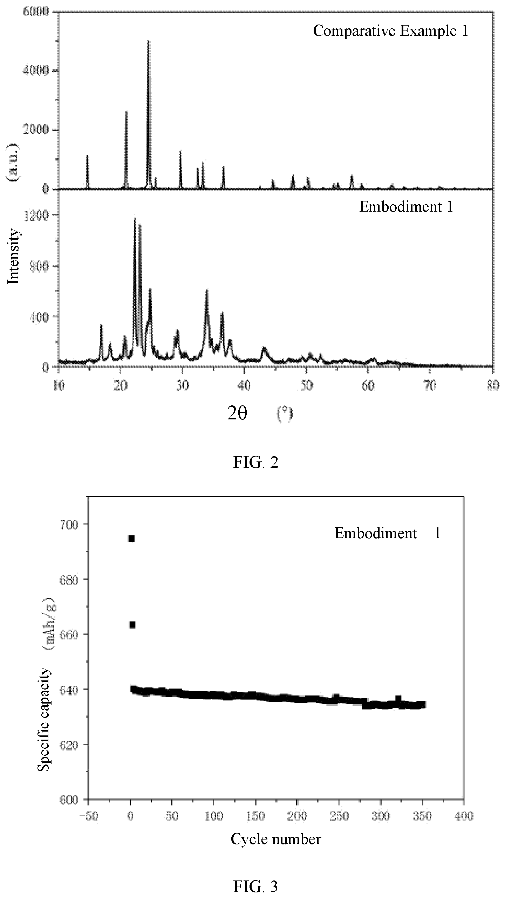

The XRD pattern of the mixed ion conductor material prepared in embodiment 1 is as shown in FIG. 2. In powder X-ray diffraction measurements using Cu-Kα rays with an X-ray wavelength of 1.5418 Angstroms, the mixed ion conductor material has characteristic diffraction peaks at diffraction angles 2θ=20.64°, 22.34°, 23.14° , and 24.80°;and the mixed ion conductor material has characteristic diffraction peaks at diffraction angles 2θ=33.92°, 36.46° and 37.64°.

The ionic conductivity and electronic conductivity of the mixed ion conductor material of embodiment 1 were tested using a conventional method. The test data are shown in Table 1.

The mixed ion conductor material prepared in this embodiment was used as an active material to prepare electrode sheets, which were then assembled into a button half cell for testing. The button cell can be prepared using a known method.The mixed ion conductor material prepared above was well mixed with carbon black and polyvinylidene fluoride in a mass ratio of 8:1:1 to prepare slurry, the slurry was coated on a copper foil current collector, dried and cut to obtain an electrode sheet; and then a button half cell was assembled in an argon-filled glove box, using metallic lithium as a counter electrode, a single-layer polyethylene film as a separator, and ethyl acetate solution containing 1 mol/L LiClO₄ as an electrolyte.

The prepared button half cell was tested in a constant current charge-discharge mode using a charge-discharge tester. The discharge cut-off voltage was 5 mV and the charge cut-off voltage was 2.0 V. The charge and discharge tests from the first cycle to the 400th cycle were all performed at a current density of 0.1 C.

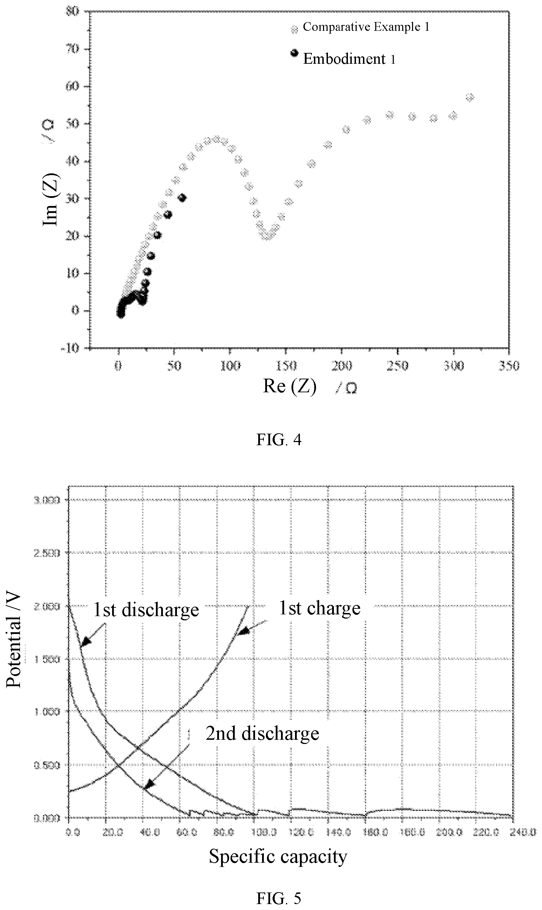

The cycle curves of the tests in embodiment 1 are as shown in FIG. 3; the EIS plot of embodiment 1 is as shown in FIG. 4.

The specific capacity-voltage curves of embodiment 1 are as shown in FIG. 5. It can be seen that the specific capacity-voltage curves show a significant reduction in the side reaction capacity.

Data on the initial capacity, initial-cycle Coulombic efficiency, and capacity retention rate after 400 cycles are listed in Table 1.

To better illustrate the effects of the embodiment of the present invention, Comparative Example 1 is compared with embodiment 1 above.

### Comparative Example 1

In this comparative example, a known solid-state electrolyte material Li_{1.3}Al_{0.3}Ti_{1.7}(PO₄)₃was used as an active material to prepare electrode sheets, which were then assembled into a button cell for testing. The specific process was the same as that of embodiment 1.

The ionic conductivity and electronic conductivity of the known solid-state electrolyte material in Comparative Example 1 were tested using a conventional method, and the test data are listed in Table 1.

The cycle curves of tests in Comparative Example 1 are shown in FIG. 3; the EIS plot of Comparative Example 1 is shown in FIG. 4. It can be seen that the material of embodiment 1 shows stable cycle performance in the constant current charge-discharge cycle test, and the interface impedance of the material of embodiment 1 is significantly reduced in the EIS test.

Data on the initial capacity, initial -cycle Coulombic efficiency, and capacity retention rate after 400 cycles are listed in Table 1.

Table 1 summarizes the test data of embodiment 1 and Comparative Example 1 as follows:

**Table 1**

| No. | Initial Capacity (mAh/g) | Proportion of Side Reaction Capacity | Ionic Conductivity (S/cm) | Electronic Conductivity (S/cm) |
|---|---|---|---|---|
| embodiment 1 | 240.17 | 58.38% | 8.63×10⁻³ | 5.11×10⁻² |
| Comparative Example 1 | 248.23 | 79.83% | 4.39×10⁻⁴ | 4.63×10⁻³ |

As can be seen from Table 1, the loss rate of the side reaction capacity of embodiment 1 relative to the initial capacity is lower than that of Comparative Example 1. This indicates that use of the mixed ion conductor material of embodiment 1 in the preparation of batteries can effectively reduce the potential of the electrochemical reaction plateau, decrease capacity loss, and improve the energy density of the batteries.

### Embodiment 2

This embodiment provides the preparation process and performance test of a mixed ionic conductor material, and the preparation process includes as follows.
(1) Deionized water was placed in a reactor, and then a total of 150 g of an L source material NaOH, an M source material ZrO₂, an N source material MnO₂, an R source material CeCl₃, a Z source material SiO₂ and an alkali metal substance Na₂CO₃ were weighed in a stoichiometric ratio as raw materials and fed into the reactor in order from the largest to the smallest particle size, where each material was stirred for 1.5 hours before feeding of the next one; and after all the raw materials were completely fed, the raw materials were mixed evenly to form a precursor solution.
(2) The precursor solution was dried at 80°C for 12 hours, and then subjected to calcination at 550°C for 2 hours to obtain an intermediate powder.
(3) In the presence of dry air, the intermediate powder was crushed and dispersed in a pulverizer for 1.5 hours, and then dried at 80°C for 12 hours to obtain a preliminary product with a Dv50 of 5 µ m.
(4) The preliminary product was evenly dispersed and spread in a crucible, and the crucible was placed in a high-temperature furnace for sintering at 450°C in a dry atmosphere for 3 hours to obtain a grayish-black powdery mixed ion conductor material with a general chemical formula of Na_{17.6}Zr_{1.2}Mn_{0.8}Ce_{1.2}(SiO₄)₃.

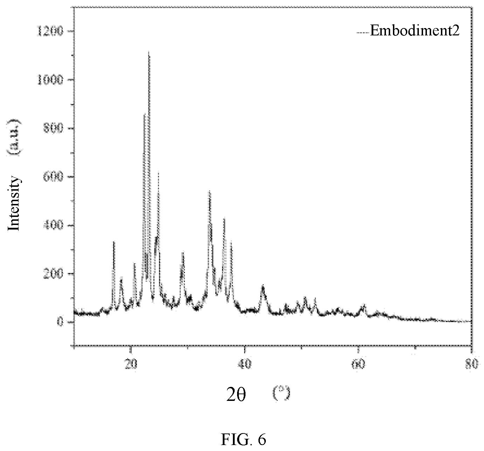

The XRD pattern of the mixed ion conductor material prepared in embodiment 2 is as shown in FIG. 6. In powder X-ray diffraction measurements using Cu-Kα rays with an X-ray wavelength of 1.5418 Angstroms, the mixed ion conductor material has characteristic diffraction peaks at diffraction angles 2θ=20.69°, 22.44°, 23.18°, and 24.85°; and has characteristic diffraction peaks at diffraction angles 2θ=33.82°, 36.54°, and 37.68°.

The ionic conductivity and electronic conductivity of the mixed ion conductor material of embodiment 2 were tested using a conventional method. The test data are shown in Table 2.

The mixed ion conductor material prepared in this embodiment 2 was used as an active material to prepare electrode sheets, which were then assembled into a button half cell for testing.The button cell can be prepared using a known method.The mixed ion conductor material prepared above was well mixed with carbon black and polyvinylidene fluoride in a mass ratio of 8:1:1 to prepare slurry, the slurry was coated on an aluminum foil current collector, dried and cut to obtain an electrode sheet; and then a button half cell was assembled in an argon-filled glove box, using metallic sodium as a counter electrode, a single-layer polyethylene film as a separator, and ethylene carbonate, dimethyl carbonate, and propylene carbonate (the volume ratio of EC:DMC:PC=1:1:1) containing a 1 M/L NaClO₄ as an electrolyte.

The prepared button half cell was tested in a constant current charge-discharge mode using a charge-discharge tester. The discharge cut-off voltage was 5 mV and the charge cut-off voltage was 2 V. The charge and discharge tests from the first cycle to the 400th cycle were all performed at a current density of 0.05 C.

Data on the initial capacity, initial -cycle Coulombic efficiency, and capacity retention rate after 400 cycles are listed in Table 2.

To better illustrate the effects of the embodiment of the present invention, Comparative Example 2 is compared with embodiment 2 above.

### Comparative Example 2

In this comparative example, a known solid-state electrolyte material Na_{1.5}Zr_{0.5}Si_{1.5}(PO₄)3 was used as an active material to prepare electrode sheets, which were then assembled into a button cell for testing. The specific process was the same as that of embodiment 2.

The ionic conductivity and electronic conductivity of the known solid-state electrolyte material in Comparative Example 2 were tested using a conventional method, and the test data are listed in Table 2.

Data on the initial capacity, initial-cycle Coulombic efficiency, and capacity retention rate after 400 cycles are listed in Table 2.

Table 2 summarizes the test data of embodiment 2 and Comparative Example 2 as follows:

**Table 2**

| No. | Initial Capacity (mAh/g) | Proportion of Side Reaction Capacity | Ionic Conductivity (S/cm) | Electronic Conductivity (S/cm) |
|---|---|---|---|---|
| Embodiment 2 | 262.42 | 52.11% | 6.91×10⁻³ | 6.69×10⁻² |
| Comparative Example 2 | 210.78 | 75.72% | 7.53×10⁻⁴ | 5.57×10⁻³ |

As can be seen from Table 2, the loss rate of the side reaction capacity of embodiment 2 relative to the initial capacity is lower than that of Comparative Example 2. This indicates that use of the mixed ion conductor material of embodiment 2 in the preparation of batteries can effectively reduce the potential of the electrochemical reaction plateau, decrease capacity loss, and improve the energy density of the batteries.

### embodiment 3

This embodiment provides the preparation process and performance test of a mixed ionic conductor material, and the preparation process includes follows.
(1) Deionized water was placed in a reactor, and then a total of 150 g of an L source material KNO₃, an M source material Mg(NO₃)₂, an N source material ZrSO₄, an R source material LaCl₃, a Z source material SeO₂ and an alkali metal substance K₂C₂O₄ were weighed in a stoichiometric ratio as raw materials and fed into the reactor in order from the largest to the smallest particle size, where each material was stirred for 1.5 hours before feeding of the next one; and after all the raw materials were completely fed, the raw materials were mixed thoroughly to form a precursor solution.
(2) The precursor solution was dried at 80°C for 12 hours, and then subjected to calcination at 550°C for 2 hours to obtain an intermediate powder.
(3) In the presence of dry air, the intermediate powder was crushed and dispersed in a pulverizer for 1.5 hours, and then dried at 80°C for 12 hours to obtain a preliminary product with a Dv50 of 5 µ m.
(4) The preliminary product was evenly dispersed and spread in a crucible, and the crucible was placed in a high-temperature furnace for sintering at 450°C in a dry atmosphere for 3 hours to obtain a grayish-black powdery mixed ion conductor material with a general chemical formula of K_{8.8}Mg_{0.1}Zr_{1.9}La_{0.1}(SeO₄)₃.

The ionic conductivity and electronic conductivity of the mixed ion conductor material of embodiment 3 were tested using a conventional method. The test data are shown in Table 3.

The mixed ion conductor material prepared in this embodiment3 was used as an active material to prepare electrode sheets, which were then assembled into a button half cell for testing. The button cell can be prepared using a known methodThe mixed ion conductor material prepared above was well mixed with carbon black and polyvinylidene fluoride in a mass ratio of 8:1:1 to prepare slurry, the slurry was coated on a copper foil current collector, dried and cut to obtain an electrode sheet; and then a button half cell was assembled in an argon-filled glove box, using metallic sodium as a counter electrode, a single-layer polyethylene film as a separator, and ethylene carbonate, dimethyl carbonate and propylene carbonate containing 1 M/L NaClO₄/ (the volume ratio of EC:DMC:PC=1:1:1) as an electrolyte.

The prepared button half cell was tested in a constant current charge-discharge mode using a charge-discharge tester. The discharge cut-off voltage was 5 mV and the charge cut-off voltage was 3 V. The charge and discharge tests from the first cycle to the 400th cycle were all performed at a current density of 0.1 C.

Data on the initial capacity, initial-cycle Coulombic efficiency, and capacity retention rate after 400 cycles are listed in Table 3.

To better illustrate the effects of the embodiment 3of the present invention, Comparative Example 3 is compared with embodiment 3 above.

### Comparative Example 3

In this comparative example, a known solid-state electrolyte material K_{1.3}Mg_{0.3}Zr_{1.7}(SeO₄)3 was used as an active material to prepare electrode sheets, which were then assembled into a button cell for testing. The specific process was the same as that of Example 3.

The ionic conductivity and electronic conductivity of the known solid-state electrolyte material in Comparative Example 3 were tested using a conventional method, and the test data are listed in Table 3.

Data on the initial capacity, initial -cycle Coulombic efficiency, and capacity retention rate after 400 cycles are listed in Table 3.

Table 3 summarizes the test data of embodiment 3 and Comparative Example 3 as follows:

**Table 3**

| No. | Initial Capacity | Proportion of Side | Ionic | Electronic |
|---|---|---|---|---|
| | (mAh/g) | Reaction Capacity | Conductivity (S/cm) | Conductivity (S/cm) |
| embodiment 3 | 276.39 | 54.69% | 7.12×10⁻³ | 8.34×10⁻² |
| Comparative Example 3 | 238.47 | 73.51% | 8.17×10⁻⁴ | 7.64×10⁻³ |

As can be seen from Table 3, the loss rate of the side reaction capacity of embodiment3 relative to the initial capacity is lower than that of Comparative Example 3. This indicates that use of the mixed ion conductor material of embodiment3 in the preparation of batteries can effectively reduce the potential of the electrochemical reaction plateau, decrease capacity loss, and improve the energy density of the batteries.

The specific embodiments described above further explain the objectives, technical solutions and beneficial effects of the present invention in detail. It should be understood that the above are only specific embodiments of the present invention and are not used to limit the scope of the present invention. Any modifications, equivalent substitutions, improvements, etc. made within the spirit and principles of the present invention should be included within the scope of the present invention.

## Claims

1. A mixed ion conductor material, wherein the mixed ion conductor material has a general chemical formula of L_{1+x+y}MₓN₂₋ₓRₓ(ZO₄)₃ , where 0≤x≤3, 6.5<y≤36, and 6.5<y/(1+x)≤9;
an ion of an L element comprises one or more of: Li⁺, Na⁺, K⁺, Rb⁺, Cs⁺, H⁺, H₃O⁺, NH₄⁺, Mg²⁺, Ca²⁺, Sr²⁺, Ba²⁺, Cu⁺, Cu²⁺, Ag⁺, Pb²⁺, Cd²⁺, Mn²⁺, Co²⁺, Ni²⁺, Zn²⁺, Al³⁺, Ln³⁺, Zr⁴⁺, Ge⁴⁺, and Hf⁴⁺;
an ion of an M element comprises one or more of: Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺;
an ion of an N element comprises one or more of: Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺;
a Z element comprises one or more of B, P, S, Si, Ge, As, Sb, Po, and Te;
an R element comprises one or more of La, Ce, Pr, Nd, and Y;
the mixed ion conductor material is obtained by adding an alkali metal substance to react with a raw material during a preparation process, wherein the alkali metal substance comprises one or more of compounds containing ions Li⁺, Na⁺, K⁺, Rb⁺ or Cs⁺; and the raw material is composed of a material containing the ion of the L element, a material containing the ion of the M element, a material containing the ion of the N element, a material containing the ion of the R element, and a material containing the ion of the Z element;
the mixed ion conductor material at room temperature has an ionic conductivity of greater than or equal to 3×10⁻³ S/cm and an electronic conductivity of greater than or equal to 10⁻² S/cm;
the mixed ion conductor material is used in a secondary battery; the secondary battery has an intersection point at 0.4 V to 0.6 V in a initial cycle and an intersection point at 0.6 V to 0.8 V in a second cycle, and the secondary battery has a side reaction specific capacity of 50 mAh/g to 200 mAh/g.

2. The mixed ion conductor material according to claim 1, wherein in powder X-ray diffraction measurements using Cu-Kα rays with an X-ray wavelength of 1.5418 Angstroms, the mixed ion conductor material has characteristic diffraction peaks between 20° and 25°, specifically at diffraction angles 2θ=20.64±1°, 22.34±1°, 23.14±1°, and 24.80±1°; when the diffraction intensities of the characteristic diffraction peaks at 2θ=20.64±1°, 22.34±1°, 23.14±1°, and 24.80±1° are denoted as I₁, I₂, I₃ and I₄ respectively, 0.10≤I₁/I₄≤1.50, and 0.50≤I₂/I₃≤2.00;
the mixed ion conductor material has characteristic diffraction peaks between 32° and 39°, specifically at diffraction angles 2θ=33.92±2^{°}, 36.46±1.50^{°}, and 37.64±1.5^{°}; when the diffraction intensities of the characteristic peaks at 2 θ =33.92±2°, 36.46±1.50°, and 37.64±1.5° are denoted as I₅, I₆ and I₇ respectively, 0.50≤I₅/I₆≤1.50, and 0.50≤I₆/I₇≤4.

3. The mixed ion conductor material according to claim 1, wherein a crystal structure of the mixed ion conductor material belongs to one or more of Pmn21 space group, P1 space group, Fd3m space group, or R3m space group.

4. The mixed ion conductor material according to claim 1, wherein the mixed ion conductor material presents a grayish-black powder appearance, with brightness L in a Lab color space satisfying 15≤L≤45.

5. A preparation method for the mixed ion conductor material according to any one of claims 1 to 4, wherein the preparation method comprises:
placing a solvent in a reactor, and then weighing, in a stoichiometric ratio, an L source material, an M source material, an N source material, an R source material, a Z source material and an alkali metal substance respectively as raw materials, and feeding the above raw materials into the reactor in order from the largest to the smallest particle size, wherein each material is stirred for 1 hour to 2 hours before feeding of the next one; and after all the raw materials are completely fed, and mixing the raw materials thoroughly to form a precursor solution;
drying the precursor solution, and then performing calcination to obtain an intermediate powder;
in a dry atmosphere, crushing and dispersing the intermediate powder in a pulverizer for 1 hour to 2 hours, and then drying at 80 °C for 12 hours to obtain a preliminary product with Dv50 of 100 nm to 10 µ m; and
evenly dispersing and spreading the preliminary product in a crucible, and placing the crucible in a high-temperature furnace for sintering in a dry atmosphere to obtain the mixed ion conductor material.

6. The preparation method according to claim 5, wherein the L source material comprises one or more of compounds containing ions Li⁺, Na⁺, K⁺, Rb⁺, Cs⁺, H⁺, H₃O⁺, NH₄⁺, Mg²⁺, Ca²⁺, Sr²⁺, Ba²⁺, Cu⁺, Cu²⁺, Ag⁺, Pb²⁺, Cd²⁺, Mn²⁺, Co²⁺, Ni²⁺, Zn²⁺, Al³⁺, Ln³⁺, Zr⁴⁺, Ge⁴⁺, and Hf⁴⁺;
the M source material comprises one or more of compounds containing ions Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺;
the N source material comprises one or more of compounds containing ions Cd²⁺, Mn²⁺, Co²⁺, Ni²⁺, Zn²⁺, Fe³⁺, Sc³⁺, Ti³⁺, V³⁺, Cr³⁺, Al³⁺, In³⁺, Ga³⁺, Y³⁺, Ln³⁺, Sn⁴⁺, Si⁴⁺, Ti⁴⁺, Zr⁴⁺, Ge⁴⁺, Hf⁴⁺, V⁵⁺, Nb⁵⁺, Ta⁵⁺, Sb⁵⁺, and As⁵⁺;
the R source material comprises one or more of compounds containing elements La, Ce, Pr, Nd and Y;
the Z source material comprises one or more of compounds containing elements B, P, S, Si, Ge, As, Sb, Po, and Te;
the alkali metal substance comprises one or more of compounds containing ions Li⁺, Na⁺, K⁺, Rb⁺ or Cs⁺;
a molar ratio of the alkali metal substance to the L source material in the raw materials is less than or equal to 9.

7. The preparation method according to claim 5, wherein the drying atmosphere is dry air; the drying is performed at a temperature of 60°C to 90°C for 5 hours to 24 hours;
the calcination is performed at a temperature of 50°C to 750°C for 2 hours to 4 hours;
the sintering is performed at a temperature of 300°C to 850°C, and the sintering temperature is held for 2 hours to 7 hours.

8. A use of the mixed ion conductor material according to any one of claims 1 to 4, wherein the mixed ion conductor material is used in one or more of an electrolyte, a separator, a positive electrode material additive, an negative electrode material additive, and an electrolyte additive.

9. A secondary battery, wherein the secondary battery comprises the mixed ion conductor material according to any one of claims 1 to 4.

10. The secondary battery according to claim 9, wherein the secondary battery comprises any one of a lithium-ion battery, a sodium-ion battery, a potassium-ion battery, and a vanadium-ion battery.
